# FASCICULE DE BREVET EUROPEEN

(11) **EP 2 690 352 B1**
(45) Date de publication et mention de la délivrance du brevet: **16.12.2020**
(21) Numéro de dépôt: 13177834.2
(22) Date de dépôt: 24.07.2013
(51) Int. Cl.: F21S 41/16, F21S 41/675, F21S 41/176

(54) **Système d'éclairage adaptatif pour véhicule automobile**
Adaptives Beleuchtungssystem für Kraftfahrzeug
Adaptive lighting system for an automobile

(30) Priorité: 27.07.2012 FR 1257304
(43) Date de publication de la demande: 29.01.2014
(73) Titulaire: VALEO VISION, 93012 Bobigny Cedex (FR)
(72) Inventeur: Ravier, Jean-Paul, 94100 SAINT MAUR DES FOSSES (FR); Fleury, Benoist, 94300 VINCENNES (FR); Boinet, Loïc, 76240 LE MESNIL ESNARD (FR)

(56) Documents cités:
- EP-A2- 0 291 475
- WO-A1-2010/058323
- DE-A1-102009 025 678
- DE-A1-102010 028 949

## Description

### Domaine de l'invention

La présente invention concerne un système d'éclairage adaptatif pour véhicule automobile, tel que le faisceau lumineux émis par un tel système d'éclairage
- soit conforme à tout instant aux réglementations en vigueur en matière d'éclairage automobile,
- permette au conducteur du véhicule de bénéficier des conditions optimales de visibilité, et
- n'éblouisse pas les autres conducteurs circulant sur la même route, dans le même sens ou en sens contraire

### État de la technique

Compte tenu du nombre important de véhicules circulant sur les routes, il est nécessaire de procurer à leurs conducteurs, en particulier lors d'une circulation nocturne, un éclairage le mieux adapté possible aux conditions de circulation afin de réduire les risques d'accidents. En particulier, il est important que le conducteur puisse avoir une vision optimale de la route qui s'étend devant lui ainsi que sur les bas-côtés de cette route, sans toutefois éblouir les autres conducteurs.

Actuellement, tous les véhicules roulant sur la route comportent un dispositif d'éclairage de la route, utilisé en cas de visibilité insuffisante, par exemple le soir, la nuit ou lors d'intempéries. Classiquement, il existe sur les véhicules automobiles modernes plusieurs types d'éclairages :
- un éclairage dit «de route », réalisé au moyen de projecteurs qui émettent un faisceau lumineux dirigé vers l'horizon, et qui éclairent la scène de route intégralement sur une longue distance, d'environ 200 mètres,
- un éclairage dit «de croisement », réalisé au moyen de projecteurs de croisement, ou codes, qui émettent un faisceau de lumière délimité par un plan de coupure supérieure, incliné d'environ 1% par rapport à l'horizontale et descendant, donnant au conducteur une visibilité sur une distance de l'ordre de 60 à 80 mètres.

Cette coupure supérieure descendante a pour but d'éviter d'éblouir les autres usagers présents dans la scène de route s'étendant devant le véhicule ou sur les bas-côtés de la route,
- un éclairage dit « de brouillard », utilisé en cas de visibilité réduite, réalisé au moyen de projecteurs qui émettent un faisceau de courte portée, de l'ordre de 40 mètres, limité vers le haut par un plan de coupure, très étalé latéralement et ne comportant pas de rayon montant susceptible de donner lieu à des phénomènes indésirables avec les gouttelettes de brouillard, et pour permettre au conducteur d'apprécier son environnement immédiat.

Les dispositifs projecteurs qui viennent d'être évoqués, et plus particulièrement ceux qui sont utilisés comme feux de croisement, produisent des faisceaux lumineux qui sont perfectibles lorsque ces dispositifs projecteurs sont utilisés dans certaines conditions. On a ainsi récemment élaboré de nouvelles fonctions, désignées comme fonctions élaborées et regroupées sous le nom d'AFS (abréviation pour « Advanced Frontlighting System » en anglais), qui proposent notamment d'autres types de faisceaux. Il s'agit notamment
- de la fonction dite BL (Bending Light en anglais pour éclairage de virage), qui peut se décomposer en une fonction dite DBL (Dynamic Bending Light en anglais pour éclairage mobile de virage) et une fonction dite FBL (Fixed Bending Light en anglais pour éclairage fixe de virage). Ces fonctions d'éclairage de virage sont utilisées en cas de circulation en courbe, et sont réalisées au moyen de projecteurs qui émettent un faisceau lumineux dont l'orientation horizontale varie lorsque le véhicule se déplace sur une trajectoire incurvée, de façon à éclairer correctement les portions de route qui sont destinées à être abordées par le véhicule et qui se trouvent non pas dans l'axe du véhicule, mais dans la direction qu'il est sur le point d'emprunter, résultant de l'angle imprimé aux roues directrices du véhicule par son conducteur ;
- de la fonction dite Town Light en anglais, pour éclairage de ville. Cette fonction assure l'élargissement d'un faisceau de type feu de croisement tout en diminuant légèrement sa portée ;
- de la fonction dite Motorway Light en anglais, pour éclairage d'autoroute, réalisant la fonction autoroute. Cette fonction assure une augmentation de la portée d'un feu de croisement en concentrant le flux lumineux du feu de croisement au niveau de l'axe optique du dispositif projecteur considéré ;
- de la fonction dite Overhead Light en anglais, pour feu de portique. Cette fonction assure une modification d'un faisceau de feu de croisement de telle sorte que des portiques de signalisation situés au dessus de la route soient éclairés de façon satisfaisante au moyen des feux de croisement ;
- une fonction dite AWL (Adverse Weather Light en anglais, pour feu de mauvais temps). Cette fonction assure une modification d'un faisceau de feu de croisement de telle sorte que le conducteur d'un véhicule circulant en sens inverse ne soit pas ébloui par le reflet de la lumière des projecteurs sur la route mouillée.

De plus, lorsque l'éclairage de croisement est en fonction, l'assiette du véhicule peut subir des variations plus ou moins importantes, dûes par exemple à son état de charge, son accélération ou sa décélération, qui provoquent une variation de l'inclinaison de la coupure supérieure du faisceau, ayant pour résultat soit d'éblouir les autres conducteurs si la coupure se trouve relevée, soit d'éclairer insuffisamment la route si la coupure se trouve abaissée. Il est alors connu d'utiliser un correcteur de portée, à commande manuelle ou automatique, pour corriger l'orientation des projecteurs de croisement.

Hormis l'éclairage de route, les autres types d'éclairage, dans lesquels le faisceau de lumière est descendant, n'offrent qu'une visibilité réduite au conducteur du véhicule, à l'avant du véhicule. Ces éclairages sont souvent insuffisants pour permettre au conducteur d'appréhender l'ensemble de la scène de route afin de pouvoir anticiper d'éventuels obstacles ou des situations potentiellement dangereuses.

Pour pallier cet inconvénient, on a développé depuis peu des projecteurs fournissant des faisceaux lumineux procurant au conducteur du véhicule équipé de ces projecteurs un éclairage comparable à celui d'un éclairage de route, mais dans lequel des zones d'ombres sont créées dans des directions dans lesquelles il n'est pas souhaitable d'émettre de la lumière, par exemple dans des directions dans lesquelles des véhicules ont été détectés, afin de ne pas en éblouir les conducteurs.

Ces faisceaux lumineux, connus sous les appellations anglo-saxonnes « Matrix Beam » ou « Pixel Lighting » selon la technologie utilisée, impliquent des conceptions complexes des projecteurs, et des réglages très fins pour obtenir le résultat voulu, c'est-à-dire des zones d'ombre variables aussi bien en dimensions qu'en direction.

Inversement, une tendance nouvelle est de proposer un faisceau d'éclairage dans lequel des zones de la scène de route contenant des détails notables sont éclairées avec une intensité lumineuse supérieure à celle de l'environnement de ces détails, pour attirer plus spécialement l'attention du conducteur du véhicule sur ces derniers.

La Demanderesse a déjà proposé, dans le document EP 1 442 927, un procédé d'éclairage d'une scène de route par un projecteur de véhicule, comportant les opérations :
- détection dans la scène de route d'au moins un personnage,
- localisation de ce personnage dans la scène de route,
- création, sur un afficheur, d'un cache de dimensions et d'emplacement correspondant au personnage,
- éclairage de la scène de route à travers l'afficheur créant une ombre portée autour du personnage,
le personnage étant détecté au moyen d'une détection thermique et/ou d'une détection de mouvement, l'éclairage de la route à travers l'afficheur éclairant uniquement une zone de la scène de route située au-dessus d'une coupure, l'éclairage de la route en dessous de la coupure étant effectué par un éclairage de croisement.

Ce procédé, bien qu'étant efficace, est perfectible, en ce sens que l'utilisation d'un afficheur à cristaux liquides ou à matrice de lentilles de focale modulable par commande électrique pose des problèmes de tenue thermique.

On connaît également du document WO 99/11968 un dispositif d'éclairage pour véhicule automobile, comprenant une surface de micro-miroirs à pilotage électronique, éclairée par un faisceau lumineux de rayons parallèles. Chaque micro-miroir peut prendre deux positions, une position « active » dans laquelle il réfléchit les rayons lumineux vers un système optique d'imagerie, qui projette ces rayons lumineux dans la scène de route devant le véhicule, et une position « inactive » dans laquelle il réfléchit les rayons lumineux vers un dispositif absorbant la lumière. L'ensemble des micro-miroirs modifie la distribution des rayons lumineux pour former différents faisceaux lumineux. Les pertes de lumière engendrées par une telle conception sont toutefois très importantes. De plus, ce dispositif présente un encombrement important.

On connaît encore du document EP 2 063 170 un dispositif d'éclairage pour véhicule automobile, muni d'une source laser dont le rayon est renvoyé par un dispositif de balayage sur une surface disposée au foyer d'une optique de projection et composée d'une pluralité d'éléments de phosphore. Ces éléments de phosphore réémettent de la lumière blanche qui est projetée par une lentille pour former un faisceau d'éclairage sur la route en avant du véhicule. Les segments de phosphore sont disposés entre la source laser et la lentille de projection, au foyer de cette lentille.

Une telle conception présente de nombreux inconvénients. Le fait d'utiliser les éléments de phosphore en transmission, c'est-à-dire en les éclairant par un faisceau laser d'un côté et en recueillant la lumière émise de l'autre côté implique :
- d'une part que l'épaisseur de phosphore soit faible : Il en résulte que ce dispositif présente le danger d'une possibilité non négligeable qu'une partie du faisceau laser traverse directement l'épaisseur de phosphore, soit reçue par la lentille et donc projetée dans la scène de route en avant du véhicule. Selon la puissance et la longueur d'onde d'émission de la source laser, celle-ci peut représenter un réel danger pour la vue des êtres vivants présents dans la scène de route, et provoquer des brûlures irréversibles de leur rétine.
d'autre part que le phosphore soit déposé sur un matériau transparent. De manière habituelle, le phosphore est déposé sur du polycarbonate ou sur du verre, qui sont connus pour être de mauvais conducteurs thermiques. Or la puissance du rayonnement laser nécessaire pour réaliser un faisceau d'éclairage automobile est relativement importante. Il en résulte alors un échauffement important du phosphore, et donc une diminution importante de son rendement de conversion du rayonnement laser en lumière blanche. D'autre part, l'utilisation des substrats transparents mentionnés plus haut entraîne une diminution de l'efficacité du système dûe aux phénomènes d'absorption inéluctable du matériau aussi bien qu'aux réflexions parasites à la traversée de ces dioptres. Une partie du rayonnement se trouve alors réfléchie vers la source de rayonnement., d'où une perte supplémentaire d'efficacité.

Par ailleurs, la partition ou le fractionnement de la surface de phosphore en segments individuels engendre une « pixellisation » ou un morcellement du faisceau lumineux projeté dans la scène de route, qui peut nuire à la précision requise pour obtenir un faisceau d'éclairage adaptatif efficace. En effet, le faisceau lumineux projeté par la lentille à l'infini n'est constitué que des images des éléments de phosphore situés dans le plan focal de la lentille. Ce faisceau lumineux, par exemple reçu par un écran à distance du véhicule et perpendiculaire à l'axe optique de la lentille, est formé de taches claires ou sombres selon que les éléments de phosphore sont éclairés ou non par le rayonnement laser, les dimensions de ces taches étant proportionnelles à celles des éléments de phosphore.

Une telle conception n'est donc pas adaptée pour former un faisceau réglementaire d'éclairage automobile, classique ou remplissant une fonction AFS, qui doit respecter des valeurs photométriques précises en des endroits précis de ce faisceau.

De plus, l'encombrement d'un projecteur selon une telle conception, selon laquelle la source laser, le dispositif de balayage, les segments de phosphore et la lentille sont disposés les uns à la suite des autres, est relativement important, et ne facilite pas l'implantation d'un tel système dans un véhicule automobile.

Un système d'éclairage selon le préambule de la revendication 1 est connu de DE 10 2010 028 949 A1 et WO 2010/058323 A1.

### Exposé de l'invention

La présente invention se place dans ce contexte et a pour objet de proposer un système d'éclairage adaptatif pour véhicule automobile, tel que le faisceau lumineux émis par un tel système d'éclairage soit simultanément et à tout instant :
- conforme aux réglementations en vigueur, et
- adapté aux conditions instantanées de circulation, tenant :
   ∘ à la configuration de la route sur laquelle circule le véhicule,
   ∘ aux paramètres de la circulation sur cette route, tels que la densité du trafic, l'éclairage de la scène de route, et en général toutes les données extérieures au véhicule susceptibles d'être prises en compte,
   ∘ aux paramètres propres au véhicule, par exemple sa vitesse, l'intensité de son accélération ou de sa décélération, la répartition de la charge à l'intérieur de ce véhicule, et en général toutes les données inhérentes au véhicule susceptibles d'être prises en compte,
   pour fournir au conducteur du véhicule un éclairage de la scène de route qui soit à tout instant optimal, c'est-à-dire qui procure au conducteur le meilleur éclairage possible de la scène de route étant données toutes les conditions de circulation ci-dessus, sans gêner les conducteurs des autres véhicules ni les piétons présents dans la scène de route éclairée par le système d'éclairage adaptatif.

Dans ce but, la présente invention a pour objet un système d'éclairage adaptatif pour véhicule automobile comportant :
- au moins une source lumineuse primaire émettant un rayonnement lumineux,
- un système de balayage recevant le rayonnement lumineux de la source lumineuse primaire et le répartissant spatialement sur la surface d'un dispositif de conversion de longueur d'onde,
- le dispositif de conversion de longueur d'onde recevant le rayonnement lumineux de la source primaire et réémettant un rayonnement de lumière blanche,
- un système optique d'imagerie recevant la lumière blanche réémise par le dispositif de conversion de longueur d'onde et projetant cette lumière en avant du véhicule pour former un faisceau d'éclairage, le dispositif de conversion de longueur d'onde étant situé au voisinage d'un plan focal du système optique d'imagerie,
- le système de balayage et le système optique étant situés du même côté du dispositif de conversion de longueur d'onde,

Selon l'invention, l'intensité du rayonnement de lumière blanche (B) émise par le dispositif de conversion de longueur d'onde (20) est modulable entre une valeur minimale et une valeur maximale, et le balayage est effectué à vitesse variable, avec une vitesse plus lente dans la zone médiane de la surface du dispositif de conversion de longueur d'onde que sur les bords de celle-ci.

Selon d'autres caractéristiques de l'invention, considérées séparément ou en combi
- le balayage est effectué selon des lignes équidistantes ;
- le balayage est effectué selon des lignes d'écartement variable ;
- la surface du dispositif de conversion de longueur d'onde est constituée de phosphore ;
- le phosphore est déposé sur un substrat réfléchissant pour le rayonnement lumineux ;
- le phosphore est déposé sur un substrat choisi dans les matériaux bons conducteurs thermiquement ;
- la surface du dispositif de conversion de longueur d'onde est constituée d'une couche continue et homogène de phosphore ;
- l'intensité du rayonnement de lumière blanche émise par le dispositif de conversion de longueur d'onde est modulable de manière continue entre une valeur minimale et une valeur maximale ;
- la valeur minimale est nulle ;
- le système de balayage recevant le rayonnement lumineux de la source lumineuse primaire est constitué de deux miroirs et mobiles oscillant autour d'axes orthogonaux ;
- le système de balayage recevant le rayonnement lumineux de la source lumineuse primaire est constitué d'un micro-miroir unique mobile autour de deux axes orthogonaux ;
- le système de balayage et la source lumineuse primaire sont pilotés par une unité de commande en fonction de la photométrie désirée du faisceau d'éclairage ;
- l'intensité du rayonnement lumineux réparti sur la surface du dispositif de conversion de longueur d'onde par le système de balayage est constante ;
- l'intensité du rayonnement lumineux réparti sur la surface du dispositif de conversion de longueur d'onde par le système de balayage est variable entre une valeur minimale et une valeur maximale ;
- la valeur minimale est nulle ;
- le système comprend au moins deux sources lumineuses primaires émettant un rayonnement lumineux, un système de balayage étant associé à chaque source lumineuse primaire pour recevoir le rayonnement lumineux de la source lumineuse primaire associée et le répartir spatialement sur la surface du dispositif de conversion de longueur d'onde ;
- le rayonnement lumineux émis par la source lumineuse primaire est un rayonnement laser ;
- le rayonnement laser a une longueur d'onde comprise entre 400 nanomètres et 500 nanomètres ;
- le rayonnement laser a une longueur d'onde voisine de 450 nanomètres ou de 460 nanomètres.

### Brève description des Figures

D'autres buts, caractéristiques et avantages de la présente invention ressortiront clairement de la description qui va maintenant être faite d'un exemple de réalisation donné à titre non limitatif en référence aux dessins annexés sur lesquels :
- La Figure 1 représente schématiquement le principe de fonctionnement d'un système d'éclairage adaptatif selon la présente invention ;
- La Figure 2 représente schématiquement une variante du principe de fonctionnement d'un système d'éclairage adaptatif selon la présente invention ;
- La Figure 3 représente schématiquement un motif lumineux créé sur une laque de phosphore équipant le système d'éclairage adaptatif des Figures 1 ou 2;
- La Figure 4 représente schématiquement le faisceau lumineux émis par le système d'éclairage adaptatif des Figures 1 ou 2 dont la plaque de phosphore émet le motif lumineux de la Figure 3 ;
- Les Figures 5, 6 et 7 représentent schématiquement des exemples de balayage de la plaque de phosphore équipant le système d'éclairage adaptatif des Figures 1 ou 2, et
- Les Figures 8 et 9 représentent schématiquement des variantes de réalisation du système d'éclairage adaptatif des Figures 1 ou 2.

### Description détaillée de modes de réalisation de l'invention

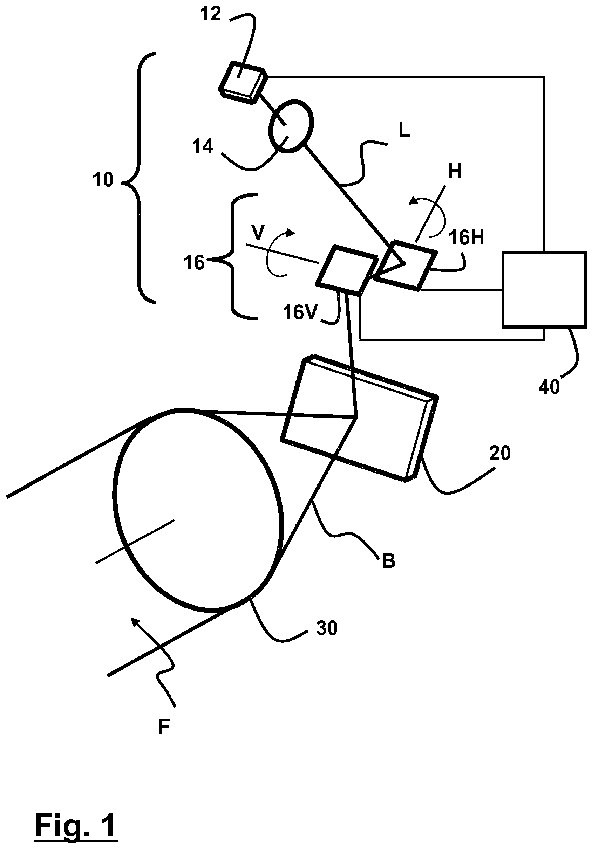

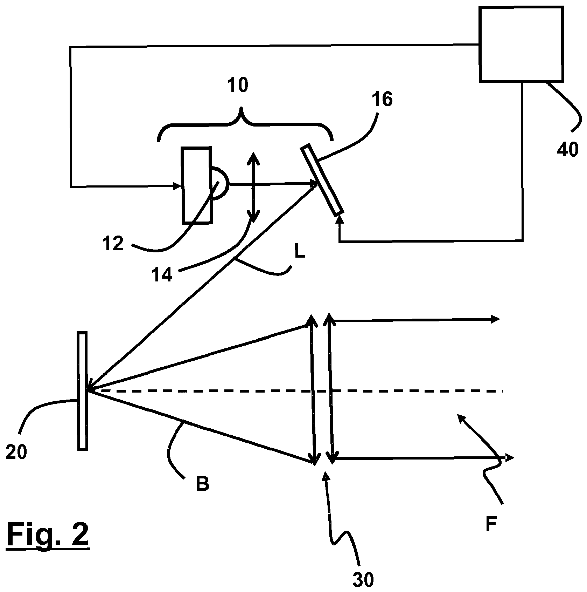

On a représenté sur les Figures 1 et 2 des schémas du principe de fonctionnement d'un système d'éclairage adaptatif selon la présente invention. Un tel système comporte une source de rayonnement lumineux 10, constituée d'une source lumineuse primaire 12, éventuellement d'une optique de focalisation 14, et d'un système de balayage 16.

La source lumineuse primaire 12 est constituée d'une source laser, par exemple une diode laser, émettant par exemple un rayonnement laser L dont la longueur d'onde est comprise entre 400 nanomètres et 500 nanomètres, et de préférence voisine de 450 ou 460 nanomètres. Ces longueurs d'onde correspondent à des couleurs allant du bleu au proche ultraviolet.

La source lumineuse primaire 12 peut également être constituée d'un dispositif optique combinant en un seul faisceau plusieurs rayonnements lasers, par exemple à l'aide de fibres optiques ou de dispositifs tirant profit des polarisations différentes de différentes sources laser.

Dans l'exemple représenté sur la Figure 1, le système de balayage 16 est constitué de deux miroirs 16H et 16V mobiles oscillant autour d'axes orthogonaux, disposés de telle sorte que :
- le miroir 16H reçoit directement le rayonnement généré par la source laser 12, et il est mobile autour d'un axe H, de manière à réfléchir le rayon laser vers le miroir 16V, et
- le miroir 16V reçoit directement le rayon laser du miroir 16H, et il est mobile autour d'un axe V, de manière à réfléchir le rayon laser vers une surface 20.

Dans l'exemple représenté sur la Figure 2, le système de balayage 16 est constitué d'un micro-miroir unique 16, mobile autour de deux axes orthogonaux, tel que ceux qui sont utilisés dans les systèmes de balayage optique appelés « scanners ».

Le rayon laser L généré par la source 12 est ainsi dévié selon deux directions par le système de balayage 16, et il en émerge dans un angle solide interceptant toute la surface d'un dispositif de conversion de longueur d'onde 20, comme par exemple une plaque de phosphore 20, ou plus exactement une plaque sur laquelle a été déposée une couche continue et homogène de phosphore.

De façon connue, chaque point de la plaque du dispositif de conversion de longueur d'onde 20 recevant le rayon laser L, par essence monochromatique et cohérent, réémet alors une lumière B de longueur d'onde différente, et notamment une lumière qui peut être considérée comme « blanche », c'est-à-dire qui comporte une pluralité de longueurs d'onde entre environ 400 nanomètres et 800 nanomètres, c'est-à-dire comprises dans le spectre de la lumière visible. Cette émission de lumière se produit, selon un diagramme d'émission lambertienne, c'est-à-dire avec une intensité lumineuse uniforme dans toutes les directions.

De préférence, le phosphore est déposé sur un substrat réfléchissant pour le rayonnement laser. De cette manière, on est assuré que le rayonnement laser qui n'aurait pas rencontré de grain de phosphore avant d'avoir traversé complètement la couche de phosphore, pourra rencontrer un grain de phosphore après avoir été réfléchi par le substrat.

De préférence également, le substrat est choisi dans les matériaux bons conducteurs thermiquement. Une telle disposition permet d'assurer une faible température du phosphore, ou au moins d'éviter que sa température ne devienne excessive. L'efficacité, c'est-à-dire le rendement de conversion du phosphore, est alors maximale.

On est donc assuré d'avoir un rendement maximal de conversion entre le rayonnement laser et la lumière blanche.

De préférence encore, la surface du dispositif de conversion de longueur d'onde est constituée d'une couche continue et homogène de phosphore. En effet, la partition de la plaque de phosphore en éléments distincts ne permet pas d'obtenir la précision souhaitée dans la réémission de lumière blanche, particulièrement au niveau des points situés à la limite entre deux éléments de phosphore. On verra plus loin que cette précision est souhaitable, sinon nécessaire, pour obtenir la photométrie désirée dans les faisceaux lumineux.

La plaque de phosphore 20 est située au voisinage immédiat du plan focal d'un système optique 30 d'imagerie, qui forme alors à l'infini une image de la plaque de phosphore 20, ou plus exactement des points de cette plaque qui émettent de la lumière blanche en réponse à l'excitation laser qu'ils reçoivent. En d'autres termes, le système optique d'imagerie 30 forme un faisceau lumineux F avec la lumière B émise par les différents points de la plaque de phosphore illuminés par le rayonnement laser L.

Le faisceau lumineux F émergeant du système d'imagerie 30 est ainsi directement fonction des rayons lumineux B émis par la plaque de phosphore 20, eux-mêmes fonction directement du rayonnement laser L qui balaye cette plaque 20.

Une unité de commande 40 pilote les différents composants de la source de rayonnement lumineux L en fonction de la photométrie désirée du faisceau lumineux F. En particulier, l'unité 40 pilote simultanément :
- le système de balayage 16 pour que le rayon laser L balaye successivement tous les points de la plaque de phosphore 20, et
- la source laser 12 pour moduler l'intensité du rayon laser L.

Il est ainsi possible d'éclairer la plaque de phosphore 20 avec le rayonnement laser L de manière à former sur cette plaque 20 une image, cette image étant formée d'une succession de lignes formées chacune d'une succession de points plus ou moins lumineux, de la même manière qu'une image sur un écran de télévision à tube cathodique.

La modulation d'intensité peut être effectuée de façon continue, l'intensité croissant ou décroissant continûment entre une valeur minimale et une valeur maximale. Elle peut également être effectuée de façon discrète, l'intensité variant par sauts d'une valeur à une autre, entre une valeur minimale et une valeur maximale. Dans les deux cas, on pourra prévoir que la valeur minimale sera nulle, correspondant à une absence de lumière.

Chaque point de la plaque de phosphore 20 ainsi éclairé par le faisceau laser L émet de la lumière blanche B, avec une intensité qui est directement fonction de l'intensité du rayon laser qui éclaire ce point, l'émission s'effectuant selon un diagramme d'émission lambertienne.

La plaque de phosphore 20 peut alors être considérée comme une source de rayonnement secondaire, constituée d'une image lumineuse, dont le système optique d'imagerie 30 forme une image à l'infini, par exemple sur un écran placé à distance dans l'axe du système optique 30 et perpendiculairement à cet axe. L'image sur un tel écran est la matérialisation du faisceau lumineux émis par le système optique 30.

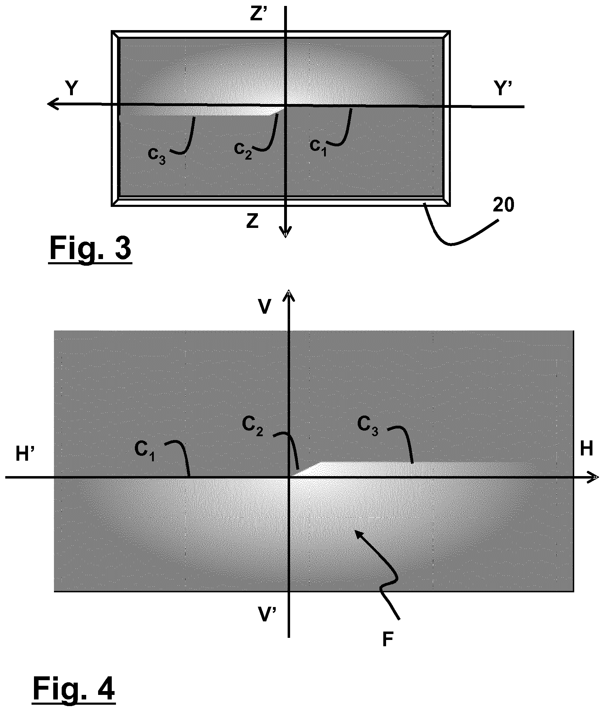

C'est ce que l'on a représenté sur les Figures 3 et 4 :
- La source de rayonnement secondaire, en lumière blanche, est constituée par exemple par l'image lumineuse formée par balayage sur la plaque 20 représentée sur la Figure 3 : les zones sombres de cette Figure correspondent à des zones qui ne reçoivent pas de rayonnement ou en reçoivent peu, et la zone claire correspond aux points illuminés par le balayage de rayonnement laser
- Le système optique 30 forme alors de cette source de rayonnement secondaire une image à l'infini, les rayons lumineux participant à la formation de cette image formant alors un faisceau lumineux dont la trace sur un écran placé à distance du système optique 30 est représentée sur la Figure 4.

Dans l'exemple choisi, la Figure 4 représente la trace sur un écran d'un faisceau de croisement F pour un sens de conduite à droite. De façon connue, un tel faisceau F de croisement doit comporter un maximum de lumière au voisinage de l'axe optique à la croisée des axes horizontal H'-H et vertical V'-V, et légèrement en dessous de l'axe horizontal, conformément aux réglementations en vigueur.

Pour obtenir ce faisceau de croisement, la plaque de phosphore 20 est éclairée de manière telle que les points situés au voisinage de la croisée de ses axes horizontal Y'-Y et vertical Z'-Z, et légèrement au dessus de l'axe horizontal Y'-Y émettent un maximum d'intensité lumineuse en lumière blanche, et donc reçoivent un maximum d'intensité de rayonnement laser.

Les variations d'éclairement des différents points de la plaque de phosphore 20 sont obtenues en pilotant la source primaire 12 de façon convenable à l'aide de l'unité de commande 40. Diverses possibilités sont offertes pour obtenir ce résultat.

On a vu plus haut que l'éclairement de la surface de la plaque de phosphore était obtenu par balayage du rayonnement laser L issu de la source primaire 12 par le système 16, qu'il comprenne un ou deux miroirs oscillants.

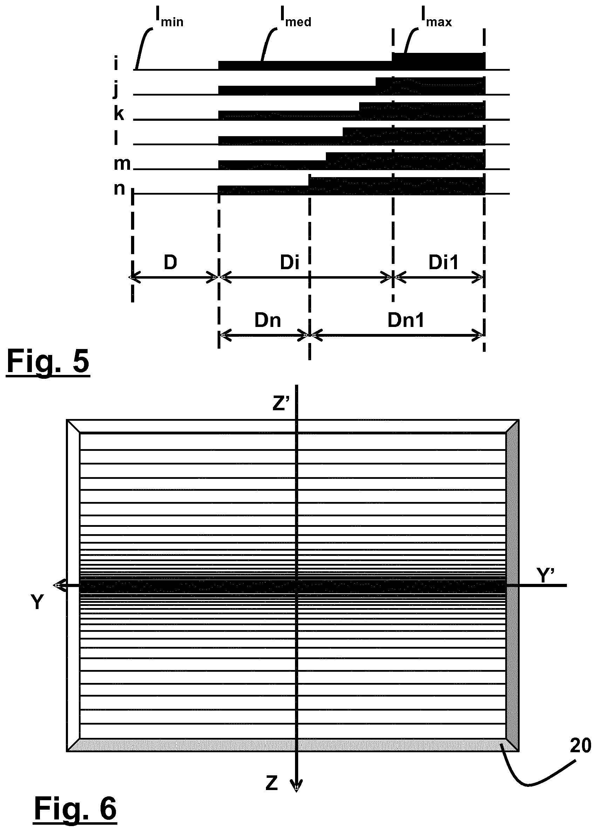

Selon un premier mode de réalisation, représenté schématiquement sur la Figure 5, le balayage est effectué à vitesse constante, par exemple selon des lignes i, j, k, l, m et n équidistantes.

En considérant la ligne i :
- sur une longueur D, l'intensité du rayonnement laser L est égale à une première valeur Iₘᵢₙ, puis,
- sur une longueur Di, l'intensité du rayonnement laser L est égale à une première valeur I_{med}, puis
- sur une longueur Di1, l'intensité du rayonnement laser L est égale à une deuxième valeur Iₘₐₓ.

De même, en considérant la ligne n :
- sur une longueur D, l'intensité du rayonnement laser L est égale à une première valeur Iₘᵢₙ, puis,
- sur une longueur Dn, l'intensité du rayonnement laser L est égale à une première valeur I_{med}, puis
- sur une longueur Dn1, l'intensité du rayonnement laser L est égale à une deuxième valeur Iₘₐₓ.

Il est ainsi possible d'obtenir une répartition lumineuse prédéterminée dans le motif constituant la source de rayonnement secondaire sur la plaque 20, en balayant des lignes équidistantes avec des intensités variables en fonction du motif désiré.

Selon un deuxième mode de réalisation, représenté schématiquement sur la Figure 6, le balayage est effectué à vitesse constante selon des lignes non équidistantes.

En effet, on sait qu'un faisceau de croisement tel que celui qui est représenté sur la Figure 4, impose une coupure nette. La coupure d'un faisceau de croisement est une limite au dessus de laquelle l'intensité lumineuse ne doit pas dépasser une valeur fixée par les réglementations internationales, de manière à ne pas éblouir les autres conducteurs circulant sur la même route. La position dans l'espace de cette coupure est définie avec une grande précision, et la variation de l'intensité lumineuse de part et d'autre de cette coupure est relativement brusque.

Sur la Figure 4, la coupure du faisceau de croisement F est matérialisée par un premier segment horizontal C₁, un deuxième segment C₂ incliné de 15° sur l'horizontale, et d'un troisième segment C₃ horizontal. Les segments C₁, C₂ et C₃ sont les images de segments C₁, C₂ et C₃ du motif créé sur la plaque 20. On voit donc que la position de ces segments C₁, C₂ et C₃ sur la plaque 20 doit être définie avec une grande précision, de même que l'intensité lumineuse de part et d'autre de ces segments doit varier relativement brusquement.

Ce but est atteint en prévoyant des lignes de balayage qui ne soient pas équidistantes, comme on l'a représenté sur la Figure 6. Au voisinage de l'axe horizontal Y'-Y où une relativement grande précision est requise, l'invention prévoit que les lignes de balayage soient plus proches les unes des autres que dans les régions éloignées de cet axe Y'-Y, où la précision de position est moindre. Il sera ainsi possible de positionner les segments C₁, C₂ et C₃ avec une grande précision sur la plaque 20 au voisinage de l'axe horizontal Y'-Y, et par conséquent de positionner les segments C₁, C₂ et C₃ avec une grande précision dans le faisceau F au voisinage de l'horizontale H'-H.

On pourra également prévoir, selon un mode de réalisation qui n'a pas été représenté, que les lignes ne soient pas réparties de façon symétrique.

Selon ce mode de réalisation, on pourra prévoir que l'intensité du rayonnement laser L soit variable le long de chaque ligne de balayage en fonction de l'intensité lumineuse que l'on désire obtenir en chacun des points de chaque ligne de balayage, c'est-à-dire en chacun des points du faisceau lumineux F.

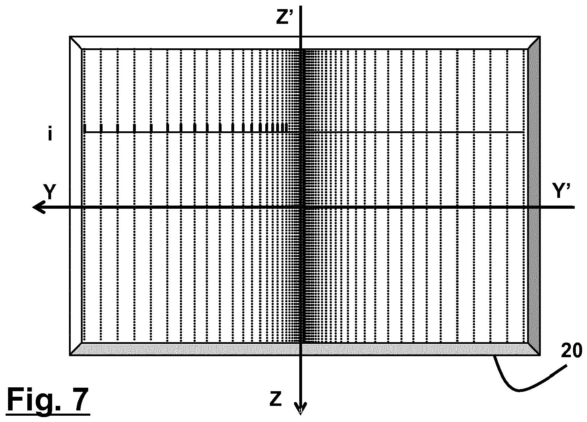

Selon un troisième mode de réalisation, représentée schématiquement sur la Figure 7, le balayage est effectué à vitesse variable. Sur cette Figure, on n'a représenté que la ligne de balayage i. En traits pointillés verticaux, on a représenté des intervalles de temps égaux. On voit ainsi que la ligne i est divisée en intervalles de plus en plus courts, parcourus chacun en des temps égaux, donc à des vitesses de plus en plus faibles.

Sur la Figure 7, on a représenté des segments de plus en plus courts à mesure que l'on s'approche de l'axe vertical Z'-Z. Ceci signifie que la ligne i est balayée ou parcourue plus lentement au voisinage de l'axe vertical que sur les bords de la plaque 20. Si le faisceau laser a une intensité lumineuse constante, il en résulte que la zone médiane de la ligne i sera éclairée plus intensément que ses extrémités, et donc pourra réémettre une lumière blanche plus intense.

En faisant varier la vitesse de balayage d'un rayonnement laser d'intensité constante, il est ainsi possible de moduler l'intensité de rayonnement de lumière blanche réémise par les différents points de la source lumineuse secondaire obtenue à l'aide de ce balayage.

Selon ce mode de réalisation, on pourra prévoir que l'intensité du rayonnement laser qui balaye la plaque 20 reste constante, et que les lignes de balayage soient équidistantes les unes des autres.

L'invention prévoit donc plusieurs paramètres :
- intensité du rayonnement laser qui balaye la plaque 20,
- vitesse de balayage de chaque ligne, et
- distance entre les lignes formant le motif lumineux sur la plaque 20
pour conférer à chaque point de chaque ligne l'intensité lumineuse désirée, et donc obtenir une réémission de lumière blanche d'intensité prédéterminée.

La limite théorique de l'intensité maximale de lumière blanche qu'il est possible d'obtenir en chaque point de la plaque de phosphore 20 est fonction de l'intensité maximale de rayonnement lumineux que la source primaire 12 peut fournir.

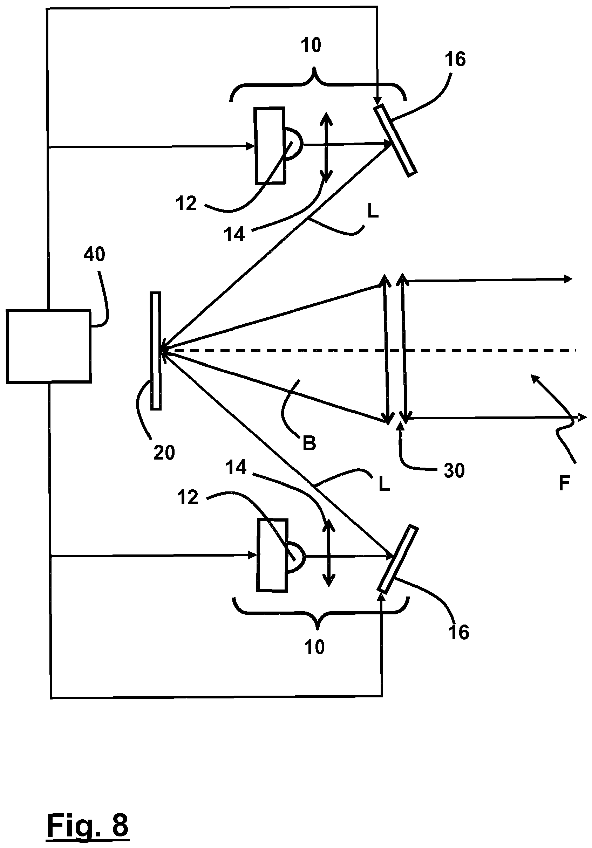

L'invention permet de s'affranchir de cette limite, et d'augmenter l'intensité de lumière blanche réémise par la plaque de phosphore 20. L'invention prévoit de disposer de plusieurs sources primaires 12 pour former le même motif sur la plaque de phosphore, ainsi qu'on l'a représenté sur la Figure 8. On voit sur cette Figure que deux sources laser 12 sont utilisées, chacune étant associée à une optique de focalisation 14 et à un système de balayage 16 renvoyant le rayonnement laser sur la même plaque de phosphore 20.

De préférence, les sources primaires 12 et les systèmes de balayage 16 sont pilotées par la même unité de commande 40 pour assurer le synchronisme des balayages. Dans le cas où les balayages ne seraient pas synchronisés, il faudrait cependant prévoir qu'ils soient tels que les points du motif éclairé sur la plaque de phosphore où on désire obtenir une illumination maximale, pour obtenir une réémission maximale de lumière blanche, soient identiques dans des balayages différents.

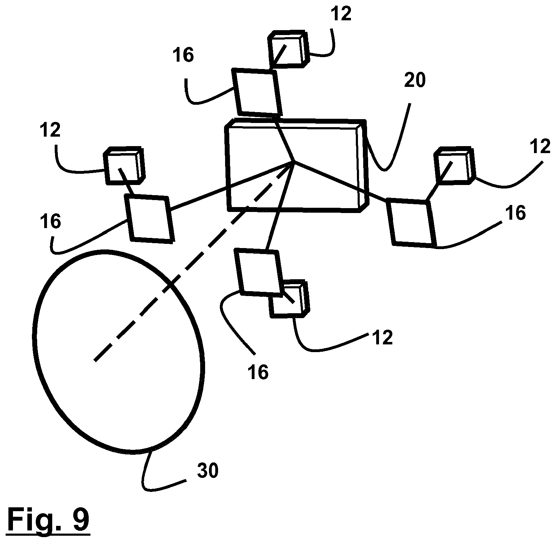

On a représenté sur la Figure 9 une autre variante, dans laquelle quatre sources primaires 12 sont utilisées, associées chacune à un système de balayage 16 renvoyant le rayonnement laser sur la même plaque de phosphore 20. Pour la clarté du dessin, les optiques de focalisation 14 et l'unité de commande 40 ont été omises.

De préférence, les axes de rotation des miroirs de deux systèmes de balayage 16 distincts sont parallèles. On pourra cependant prévoir que les directions de balayage ne soient pas rigoureusement parallèles, de manière à améliorer l'homogénéité, la concentration ou la résolution du motif créé sur la plaque 20.

Ainsi, en augmentant le nombre de sources primaires de rayonnement laser, il est possible d'augmenter l'intensité de rayonnement incident sur la plaque de phosphore 20, et par conséquent d'augmenter proportionnellement l'intensité de lumière blanche réémise par cette plaque 20. Si par exemple on dispose de deux sources primaires 12 identiques, on obtiendra deux fois plus de lumière blanche réémise, à condition toutefois d'éviter l'élévation de température de la couche de phosphore.

On a donc bien réalisé un système d'éclairage adaptatif pour véhicule automobile, qui permet de générer tout type de faisceau d'éclairage prédéterminé. En effet, le faisceau d'éclairage est l'image exacte d'un motif lumineux créé sur une plaque de phosphore par un balayage de rayonnement laser. Ce faisceau d'éclairage F est formé des rayons lumineux émis par le motif lumineux et répartis par le système optique d'imagerie 30 en avant du véhicule équipé de ce système d'éclairage.

Un tel système d'éclairage adaptatif peut ainsi générer un faisceau de croisement comme on l'a plus particulièrement décrit. Il peut aussi générer un faisceau antibrouillard, dont la ligne de coupure est plate.

Pour un faisceau à coupure, il est aisé de commander, par l'intermédiaire de l'unité de commande 40, une translation le long de l'axe vertical Z'-Z de l'ensemble du motif créé sur la plaque de phosphore 20 pour relever ou abaisser la coupure du faisceau d'éclairage. Le système d'éclairage adaptatif selon l'invention permet ainsi de remplir la fonction de correction de portée en fonction de l'assiette du véhicule, sans nécessiter de modifier l'orientation verticale de l'axe optique du système d'éclairage.

Pour un faisceau de croisement, il est possible de ne déplacer verticalement que le maximum d'intensité situé au voisinage immédiat de la coupure dans le motif créé sur la plaque de phosphore. Il en résultera un déplacement simultané du maximum d'intensité dans le faisceau d'éclairage. Le système d'éclairage adaptatif selon l'invention permet ainsi de remplir la fonction de faisceau de croisement pour conduite sur autoroute, sans qu'il soit nécessaire de modifier la structure du système d'éclairage pour remplir cette fonction. Le déplacement du maximum d'intensité pour remplir cette fonction est de relativement faible amplitude. Un déplacement correspondant dans le motif lumineux sur la plaque de phosphore sera facilité si la densité des lignes de balayage est plus importante au voisinage de l'axe horizontal Y'-Y, comme on l'a expliqué en référence à la Figure 6.

De même, il est aisé de commander, par l'intermédiaire de l'unité de commande 40, une légère translation le long de l'axe horizontal Y'-Y du motif créé sur la plaque de phosphore 20 pour modifier l'orientation du faisceau lumineux dans le sens horizontal. Il est également aisé de modifier la répartition de lumière, en renforçant l'intensité lumineuse d'un côté de l'axe vertical Z'-Z par rapport à l'intensité lumineuse de l'autre côté de cet axe vertical Z'-Z. Le système d'éclairage adaptatif selon l'invention permet ainsi de remplir la fonction d'éclairage de virage, sans nécessiter de modifier l'orientation horizontale de l'axe optique du système d'éclairage.

La présente invention permet ainsi d'obtenir toute répartition photométrique prédéterminée dans le faisceau d'éclairage projeté par le système optique d'imagerie 30. Il suffit pour obtenir ce résultat de commander, par l'intermédiaire de l'unité de commande 40, l'intensité du rayonnement laser L et/ou la vitesse de balayage et/ou la densité des lignes de balayage, l'intensité de la réémission de lumière blanche B en chaque point du motif lumineux créé sur la plaque de phosphore 20. On obtiendra ainsi dans le faisceau lumineux projeté par le système optique 30 la répartition photométrique désirée.

Il sera ainsi possible d'obtenir un faisceau de route, c'est-à-dire sans coupure, dont le maximum d'intensité est situé dans l'axe du dispositif d'éclairage, de même que toutes les fonctions AFS, par exemple l'éclairage de ville, l'éclairage de mauvais temps ou la fonction d'éclairage des feux de portique, ou encore les fonctions Matrix Beam ou Pixel Lighting. Il suffit pour obtenir ces faisceaux ou ces fonctions de moduler l'intensité des différents points du motif lumineux créé sur la plaque de phosphore 20.

Bien entendu, la présente invention n'est pas limitée aux modes de réalisation qui ont été décrits, mais l'homme du métier pourra au contraire lui apporter de nombreuses modifications qui rentrent dans son cadre.

C'est ainsi par exemple qu'on pourra augmenter l'intensité lumineuse émise dans des directions prédéterminées pour attirer l'attention du conducteur sur des détails de la scène de route situés dans ces directions. Ces détails pourront être constitués par exemple d'obstacles détectés par différents capteurs placés sur le véhicule, ou par des directions à prendre, déterminées par exemple par un système GPS. De même, si des panneaux de signalisation sont détectés par des capteurs tels que des caméras situés sur le véhicule, le système d'éclairage adaptatif pourra contrôler la lumière émise vers ces panneaux, pour éviter qu'ils ne deviennent éblouissants pour le conducteur du véhicule, ou au contraire pour en améliorer la visibilité et la lisibilité.

Le système d'éclairage adaptatif pour véhicule automobile qui vient d'être décrit permet par ailleurs, sans aucune modification matérielle du projecteur, de rendre ce dernier conforme à toute législation ou réglementation européenne, américaine, asiatique, à conduite à droite ou à gauche, etc...

## Revendications

1. Système d'éclairage adaptatif pour véhicule automobile comportant :
- au moins une source lumineuse primaire (12) émettant un rayonnement lumineux (L),
- un système de balayage (16) recevant le rayonnement lumineux (L) de la source lumineuse primaire (12) et le répartissant spatialement sur la surface d'un dispositif de conversion de longueur d'onde (20),
- le dispositif de conversion de longueur d'onde (20) recevant le rayonnement lumineux (L) de la source primaire (12) et réémettant un rayonnement de lumière blanche (B),
- un système optique d'imagerie (30) recevant la lumière blanche (B) réémise par le dispositif de conversion de longueur d'onde (20) et projetant cette lumière (B) en avant du véhicule pour former un faisceau d'éclairage, le dispositif de conversion de longueur d'onde (20) étant situé au voisinage d'un plan focal du système optique d'imagerie (30),
le système de balayage (16) et le système optique (30) étant situés du même côté du dispositif de conversion de longueur d'onde (20),
l'intensité du rayonnement de lumière blanche (B) émise par le dispositif de conversion de longueur d'onde (20) étant modulable entre une valeur minimale et une valeur maximale, **caractérisé en ce que** le balayage est effectué à vitesse variable, avec une vitesse plus lente dans la zone médiane de la surface du dispositif de conversion de longueur d'onde (20) que sur les bords de celle-ci.

2. Système selon la revendication 1, **caractérisé en ce que** le balayage est effectué selon des lignes équidistantes.

3. Système selon la revendication 1, **caractérisé en ce que** le balayage est effectué selon des lignes d'écartement variable.

4. Système selon l'une quelconque des revendications précédentes, **caractérisé en ce que** la surface du dispositif de conversion de longueur d'onde (20) est constituée de phosphore.

5. Système selon la revendication précédente, **caractérisé en ce que** le phosphore est déposé sur un substrat réfléchissant pour le rayonnement lumineux (L).

6. Système selon la revendication 4, **caractérisé en ce que** le phosphore est déposé sur un substrat choisi dans les matériaux bons conducteurs thermiquement.

7. Système selon la revendication précédente, **caractérisé en ce que** la surface du dispositif de conversion de longueur d'onde (20) est constituée d'une couche continue et homogène de phosphore.

8. Système selon l'une des revendications précédentes, **caractérisé en ce que** l'intensité du rayonnement de lumière blanche (B) émise par le dispositif de conversion de longueur d'onde (20) est modulable de manière continue entre une valeur minimale et une valeur maximale.

9. Système selon la revendication précédente, **caractérisé en ce que** la valeur minimale est nulle.

10. Système selon l'une des revendications précédentes, **caractérisé en ce que** le système de balayage (16) recevant le rayonnement lumineux (L) de la source lumineuse primaire (12) est constitué de deux miroirs (16H) et (16V) mobiles oscillant autour d'axes orthogonaux.

11. Système selon l'une des revendications 1 à 10, **caractérisé en ce que** le système de balayage (16) recevant le rayonnement lumineux (L) de la source lumineuse primaire (12) est constitué d'un micro-miroir unique (16) mobile autour de deux axes orthogonaux.

12. Système selon l'une quelconque des revendications précédentes, **caractérisé en ce que** le système de balayage (16) et la source lumineuse primaire (12) sont pilotés par une unité de commande (40) en fonction de la photométrie désirée du faisceau d'éclairage (F).

13. Système selon la revendication précédente, **caractérisé en ce que** l'intensité du rayonnement lumineux (L) réparti sur la surface du dispositif de conversion de longueur d'onde (20) par le système de balayage (20) est constante.

14. Système selon la revendication 12, **caractérisé en ce que** l'intensité du rayonnement lumineux (L) réparti sur la surface du dispositif de conversion de longueur d'onde (20) par le système de balayage (20) est variable entre une valeur minimale et une valeur maximale.

15. Système selon la revendication précédente, **caractérisé en ce que** la valeur minimale est nulle.

16. Système selon l'une quelconque des revendications précédentes, **caractérisé en ce qu'**il comprend au moins deux sources lumineuses primaires (12) émettant un rayonnement lumineux (L), un système de balayage (16) étant associé à chaque source lumineuse primaire (12) pour recevoir le rayonnement lumineux (L) de la source lumineuse primaire (12) associée et le répartir spatialement sur la surface du dispositif de conversion de longueur d'onde (20).

17. Système selon l'une quelconque des revendications précédentes, **caractérisé en ce que** le rayonnement lumineux (L) émis par la source lumineuse primaire (12) est un rayonnement laser.

18. Système selon la revendication précédente, **caractérisé en ce que** le rayonnement laser a une longueur d'onde comprise entre 400 nanomètres et 500 nanomètres.

19. Système selon la revendication précédente, **caractérisé en ce que** le rayonnement laser a une longueur d'onde voisine de 450 nanomètres ou de 460 nanomètres.

## Patentansprüche

1. Adaptives Beleuchtungssystem für ein Kraftfahrzeug, bestehend aus :
- mindestens eine primäre Lichtquelle (12), die eine Lichtstrahlung (L) aussendet,
- ein Scansystem (16), das die Lichtstrahlung (L) von der primären Lichtquelle (12) empfängt und sie räumlich über die Oberfläche einer Wellenlängenwandlervorrichtung (20) verteilt,
- die Wellenlängenwandlervorrichtung (20), die die Lichtstrahlung (L) von der Primärquelle (12) empfängt und weiße Lichtstrahlung (B) wieder aussendet,
- ein optisches Abbildungssystem (30), das das von der Wellenlängenwandlervorrichtung (20) reemittierte weiße Licht (B) empfängt und dieses Licht (B) vor das Fahrzeug projiziert, um einen Beleuchtungsstrahl zu bilden, wobei die Wellenlängenwandlervorrichtung (20) in der Nähe einer Brennebene des optischen Abbildungssystems (30) angeordnet ist,
wobei das Scansystem (16) und das optische System (30) auf derselben Seite der Wellenlängenwandlervorrichtung (20) angeordnet sind,
wobei die Intensität der von der Wellenlängenwandlervorrichtung (20) emittierten Weißlichtstrahlung (B) zwischen einem minimalen und einem maximalen Wert einstellbar ist,
**dadurch gekennzeichnet, dass** das Scannen mit variabler Geschwindigkeit durchgeführt wird, wobei die Geschwindigkeit im mittleren Bereich der Oberfläche der Wellenlängenwandlervorrichtung (20) geringer ist als an deren Rändern.

2. Das System nach Anspruch 1, **dadurch gekennzeichnet, dass** das Scannen entlang äquidistanter Linien durchgeführt wird.

3. Das System nach Anspruch 1, **dadurch gekennzeichnet, dass** das Scannen entlang von Linien mit variablem Abstand durchgeführt wird.

4. Das System nach einem der vorhergehenden Ansprüche, **dadurch gekennzeichnet, dass** die Oberfläche der Wellenlängenwandlervorrichtung (20) aus Phosphor besteht.

5. System nach dem vorhergehenden Anspruch, **dadurch gekennzeichnet, dass** der Phosphor auf einem Substrat abgeschieden ist, das die Lichtstrahlung (L) reflektiert.

6. System nach Anspruch 4, **dadurch gekennzeichnet, dass** der Phosphor auf einem Substrat abgeschieden wird, das aus Materialien ausgewählt ist, die gute Wärmeleiter sind.

7. System nach Anspruch 1, **dadurch gekennzeichnet, dass** die Oberfläche der Wellenlängenwandlervorrichtung (20) aus einer kontinuierlichen und homogenen Phosphorschicht besteht.

8. System nach einem der vorhergehenden Ansprüche, **dadurch gekennzeichnet, dass** die Intensität der von der Wellenlängenwandlervorrichtung (20) emittierten Weißlichtstrahlung (B) kontinuierlich zwischen einem Minimalwert und einem Maximalwert veränderbar ist.

9. System nach dem vorhergehenden Anspruch, **dadurch gekennzeichnet, dass** der Minimalwert Null ist.

10. System nach einem der vorhergehenden Ansprüche, **dadurch gekennzeichnet, dass** das Scansystem (16), das die Lichtstrahlung (L) von der primären Lichtquelle (12) empfängt, aus zwei beweglichen Spiegeln (16H) und (16V) besteht, die um orthogonale Achsen oszillieren.

11. System nach einem der Ansprüche 1 bis 10, **dadurch gekennzeichnet, dass** das Scansystem (16), das die Lichtstrahlung (L) von der primären Lichtquelle (12) empfängt, aus einem einzigen Mikrospiegel (16) besteht, der um zwei orthogonale Achsen beweglich ist.

12. System nach einem der vorstehenden Ansprüche, **dadurch gekennzeichnet, dass** das Scansystem (16) und die primäre Lichtquelle (12) durch eine Steuereinheit (40) in Abhängigkeit von der gewünschten Photometrie des Beleuchtungsstrahls (F) gesteuert werden.

13. System nach dem vorhergehenden Anspruch, **dadurch gekennzeichnet, dass** die Intensität der Lichtstrahlung (L), die durch das Scansystem (16) über die Oberfläche der Wellenlängenwandlervorrichtung (20) verteilt wird, konstant ist.

14. System nach Anspruch 12, **dadurch gekennzeichnet, dass** die Intensität der Lichtstrahlung (L), die durch das Scansystem (20) über die Oberfläche der Wellenlängenwandlervorrichtung (20) verteilt wird, zwischen einem Minimalwert und einem Maximalwert variabel ist.

15. System nach dem vorhergehenden Anspruch, **dadurch gekennzeichnet, dass** der Minimalwert Null ist.

16. System nach einem der vorstehenden Ansprüche, **dadurch gekennzeichnet, dass** es mindestens zwei primäre Lichtquellen (12) umfasst, die eine Lichtstrahlung (L) aussenden, wobei jeder primären Lichtquelle (12) ein Scansystem (16) zugeordnet ist, um die Lichtstrahlung (L) der zugeordneten primären Lichtquelle (12) zu empfangen und sie räumlich über die Oberfläche der Wellenlängenwandlervorrichtung (20) zu verteilen.

17. System nach einem der vorstehenden Ansprüche, **dadurch gekennzeichnet, dass** die von der primären Lichtquelle (12) emittierte Lichtstrahlung (L) eine Laserstrahlung ist.

18. System nach dem vorhergehenden Anspruch, **dadurch gekennzeichnet, dass** die Laserstrahlung eine Wellenlänge zwischen 400 Nanometer und 500 Nanometer hat.

19. System nach dem vorhergehenden Anspruch, **dadurch gekennzeichnet, dass** die Laserstrahlung eine Wellenlänge von etwa 450 Nanometer oder 460 Nanometer hat.

## Claims

1. Adaptive lighting system for motor vehicles comprising :
- at least one primary light source (12) emitting light radiation (L),
- a scanning system (16) which receives the light radiation (L) from the primary light source (12) and distributes it spatially over the surface of a wavelength conversion device (20),
- the wavelength conversion device (20) receiving light radiation (L) from the primary source (12) and re-emitting white light radiation (B),
- an optical imaging system (30) receiving the white light (B) re-emitted by the wavelength conversion device (20) and projecting this light (B) in front of the vehicle to form an illumination beam, the wavelength conversion device (20) being located in the vicinity of a focal plane of the optical imaging system (30),
the scanning system (16) and the optical system (30) being located on the same side of the wavelength conversion device (20),
the intensity of the white light radiation (B) emitted by the wavelength conversion device (20) being adjustable between a minimum and a maximum value,
**characterized in that** the scanning is performed at variable speed, with a slower speed in the middle area of the surface of the wavelength conversion device (20) than at the edges thereof.

2. The system according to claim 1, **characterized in that** the scanning is carried out along equidistant lines.

3. The system according to claim 1, **characterized in that** the scanning is carried out along lines of variable spacing.

4. A system according to any one of the preceding claims, **characterized in that** the surface of the wavelength conversion device (20) consists of phosphorus.

5. System according to the preceding claim, **characterized in that** the phosphorus is deposited on a substrate that reflects light radiation (L).

6. System according to claim 4, **characterized in that** the phosphorus is deposited on a substrate selected from materials which are good thermal conductors.

7. System according to the preceding claim, **characterized in that** the surface of the wavelength conversion device (20) consists of a continuous and homogeneous layer of phosphorus.

8. System according to one of the preceding claims, **characterized in that** the intensity of the white light radiation (B) emitted by the wavelength conversion device (20) is continuously variable between a minimum value and a maximum value.

9. System according to the previous claim, **characterized in that** the minimum value is zero.

10. System according to one of the preceding claims, **characterized in that** the scanning system (16) receiving the light radiation (L) from the primary light source (12) is made up of two movable mirrors (16H) and (16V) oscillating about orthogonal axes.

11. System according to one of claims 1 to 10, **characterized in that** the scanning system (16) receiving the light radiation (L) from the primary light source (12) consists of a single micromirror (16) movable about two orthogonal axes.

12. System according to any one of the preceding claims, **characterized in that** the scanning system (16) and the primary light source (12) are controlled by a control unit (40) according to the desired photometry of the illumination beam (F).

13. System according to the preceding claim, **characterized in that** the intensity of the light radiation (L) distributed over the surface of the wavelength conversion device (20) by the scanning system (20) is constant.

14. System according to claim 12, **characterized in that** the intensity of the light radiation (L) distributed over the surface of the wavelength conversion device (20) by the scanning system (20) is variable between a minimum value and a maximum value.

15. System according to the previous claim, **characterized in that** the minimum value is zero.

16. System according to any one of the preceding claims, **characterized in that** it comprises at least two primary light sources (12) emitting light radiation (L), a scanning system (16) being associated with each primary light source (12) in order to receive the light radiation (L) from the associated primary light source (12) and distribute it spatially over the surface of the wavelength conversion device (20).

17. System according to any of the preceding claims, **characterized in that** the light radiation (L) emitted by the primary light source (12) is laser radiation.

18. A system according to the previous claim, **characterized in that** the laser radiation has a wavelength between 400 nanometers and 500 nanometers.

19. System according to the preceding claim, **characterized in that** the laser radiation has a wavelength of approximately 450 nanometres or 460 nanometres.
